# EUROPEAN PATENT SPECIFICATION

(11) **EP 4 266 147 B1**
(45) Date of publication and mention of the grant of the patent: **03.09.2025**
(21) Application number: 21923461.4
(22) Date of filing: 28.12.2021
(51) Int. Cl.: G06F 1/16, G06F 1/26, H04M 1/02, H02J 50/60, H02J 50/10, H02J 50/80, H02J 7/00

(54) **FOLDABLE ELECTRONIC APPARATUS AND METHOD FOR SUPPLYING ELECTRICAL POWER TO EXTERNAL ELECTRONIC APPARATUS BY USING FOLDABLE ELECTRONIC APPARATUS**
FALTBARE ELEKTRONISCHE VORRICHTUNG UND VERFAHREN ZUR STROMVERSORGUNG EINER EXTERNEN ELEKTRONISCHEN VORRICHTUNG DURCH VERWENDUNG DER FALTBAREN ELEKTRONISCHEN VORRICHTUNG
APPAREIL ÉLECTRONIQUE PLIABLE ET PROCÉDÉ POUR FOURNIR DE L'ÉNERGIE ÉLECTRIQUE À UN APPAREIL ÉLECTRONIQUE EXTERNE À L'AIDE D'UN APPAREIL ÉLECTRONIQUE PLIABLE

(30) Priority: 29.01.2021 KR 20210013565
(43) Date of publication of application: 25.10.2023
(73) Proprietor: Samsung Electronics Co., Ltd., Suwon-si, Gyeonggi-do 16677 (KR)
(72) Inventor: LEE, Seyeon, Suwon-si, Gyeonggi-do 16677 (KR)
(74) Representative: HGF
(86) International application number: PCT/KR2021/020015
(87) International publication number: WO 2022/164055

(56) References cited:
- EP-A1- 4 124 005
- KR-A- 20120 131 584
- KR-A- 20150 035 613
- KR-A- 20160 066 873
- KR-A- 20180 047 800
- US-A1- 2016 162 241
- US-A1- 2017 206 049
- US-A1- 2018 254 666
- US-A1- 2020 028 376
- US-A1- 2020 264 659

## Description

### [Technical Field]

Various embodiments disclosed herein relate to a foldable electronic device and a method of supplying power to an external electronic device using the foldable electronic device.

### [Background Art]

An electronic device may include a foldable electronic device capable of changing a display into an unfolded state and a folded state. The foldable electronic device may display a screen through a main display in the unfolded state and display a screen through a sub-display in the folded state.

An electronic device may share power stored in a battery with other electronic devices. Other electronic devices may be portable electronic devices such as smart phones or wearable electronic devices such as smart watches, bands, and Bluetooth headsets. The electronic device may wirelessly supply power to another electronic device to charge the another electronic device. Both a non-flexible electronic device and the foldable electronic device may supply power to other electronic devices.

The foldable electronic device may include a charger disposed on an opposite side to the main display. The foldable electronic device may include a charger disposed in an area other than an area where a sub-display is disposed. The foldable electronic device may supply power to another electronic device based on the another electronic device being placed on the charger.

EP4124005A1 published on 25 January 2023 claims the priority date of 4 May 2020. Its content as filed is therefore considered to be comprised in the state of the art relevant to the question of novelty, pursuant to Article 54(3) EPC. EP4124005A1 relates to an electronic device that comprises a first housing; a second housing; a first hinge for connecting one side of the first housing to one side of the second housing to be foldable; a third housing; a second hinge for connecting another side of the second housing to one side of the third housing to be foldable; a display including a first display area arranged on the first housing, a second display area arranged on the second housing, and a third display area arranged on the third housing; and a processor which is configured to, in a state in which the first hinge and the second hinge are unfolded, detect folding of at least one of the first hinge and the second hinge and supply electric power to an external device while displaying information on the first display area when a first signal corresponding to detection of the external device is identified from at least one of the second housing and the third housing each including a wireless power transmission/reception circuit.

US2017206049A1 relates to An electronic device that includes a foldable housing. The foldable housing includes a first housing including a first display and an illuminance sensor on a front surface, and a second housing, adjacent to the first housing, including a hole formed through a front surface and a rear surface of the second housing. The front surface of the first housing faces the front surface of the second housing when the second housing is folded in a first direction with respect to the first housing, and a rear surface of the first housing faces the rear surface of the second housing when the second housing is folded in a second direction with respect to the first housing.

US2020028376A1 relates to An electronic device that includes a display, a charging circuit that transmits and receives power to and from an external electronic device, a sensor circuit that senses a spatial relationship of the electronic device with the external electronic device, a processor that is electrically connected with the display, the charging circuit, and the sensor circuit. When wirelessly transmitting or receiving power to or from the external electronic device using the charging circuit, the processor may transmit and receive information associated with the wireless transmission or reception of power and display the information based on the spatial relationship.

### [Disclosure]

### [Technical Problem]

The foldable electronic device may be placed to allow the charger to face upward such that another electronic device is positioned on the charger. When the foldable electronic device is placed to allow the charger to face upward while the foldable electronic device has been folded, the main display may be covered and the sub-display may be placed to face the floor. When the foldable electronic device is placed to allow the charger to face upward while the foldable electronic device has been unfolded, the main display may face the floor and the sub-display may be turned off.

It may not be easy for a user to use the foldable electronic device because the screens of the main display and sub-display cannot be viewed by the user while the foldable electronic device is supplying power to another electronic device. Also, it may not be easy to identify a state of charge while the foldable electronic device supplies power to other electronic devices.

Various embodiments disclosed herein provide a foldable electronic device device capable of allowing a user to use the foldable electronic device and identify a state of charge while supplying power to another electronic device and a method of supplying power to an external electronic device using the foldable electronic device.

### [Technical Solution]

According to an embodiment disclosed herein, an electronic device including a folded state and an unfolded state includes a housing including a first side that is covered in the folded state and visible to outside in the unfolded state, and a second side that faces a direction opposite to the first side in the unfolded state, a main display externally visible to the outside through the first side in the unfolded state, a sub-display disposed in a first area of the second side, a charger disposed in a second area of the second side, a sensor module and a processor operatively connected to the main display, the sub-display, the charger, and the sensor module, wherein the processor may determine whether the electronic device is in the unfolded state using the sensor module, determine whether the first side is placed on an external ground using the sensor module, determine whether an external electronic device exists in the charger in response to the electronic device being in the unfolded state and the first side being placed on the external ground, turn on a screen of the sub-display in response to existence of the external electronic device in the charger, wirelessly supply power to the external electronic device using the charger, and maintain the screen of the sub-display turned on while supplying the power to the external electronic device.

According to an embodiment disclosed herein, a method of supplying power to an external electronic device using an electronic device includes determining whether the electronic device is in an unfolded state by using a sensor module of the electronic device, determining whether a first side of a housing of the electronic device is placed on an external ground by using the sensor module, wherein the first side is covered in the folded state and visible to outside in the unfolded state, and wherein a main display is externally visible to the outside through the first side in the unfolded state, determining whether an external electronic device exists in a charger of the electronic device in response to the electronic device being in the unfolded state and the first side being placed on the external ground, turning on a screen of a sub-display of the electronic device in response to existence of the external electronic device in the charger, the sub-display disposed in an area of a second side of the housing, wherein the second side faces a direction opposite to the first side in the unfolded state, supplying power wirelessly to the external electronic device using the charger, and maintaining the screen of the sub-display turned on while supplying the power to the external electronic device.

### [ Advantageous Effects]

According to the embodiments disclosed herein, a user may use a foldable electronic device through a sub-display while power is supplied to another electronic device.

Also, according to the embodiments disclosed herein, a state of charge may be identified while a foldable electronic device supplies power to another electronic device.

In addition, various effects identified directly or indirectly through the disclosure may be provided.

### [ Description of Drawings]

FIG. 1 is a block diagram of an electronic device in a network environment, according to various embodiments.
FIG. 2 is a block diagram of a display device, according to various embodiments.
FIG. 3 is a diagram showing an unfolded state of an electronic device according to an embodiment.
FIG. 4 is a diagram illustrating a folded state of an electronic device according to an embodiment.
FIG. 5 is an exploded perspective view of an electronic device according to an embodiment.
FIG. 6 is a diagram showing a charger for an electronic device according to an embodiment.
FIG. 7 is a diagram illustrating that an external electronic device exists in a charger of an electronic device according to an embodiment.
FIG. 8 is a diagram illustrating that an electronic device supplies power to an external electronic device according to an embodiment.
FIG. 9 is a flowchart illustrating a method of supplying power to an external electronic device using an electronic device according to an embodiment.
FIG. 10 is a flowchart illustrating a method of charging an external electronic device using an electronic device according to an embodiment.
FIG. 11 is a flowchart illustrating a method of performing wireless power sharing while controlling a sub-display based on a state of an electronic device and whether or not the electronic device is connected to a charging device, according to an embodiment.

With regard to description of drawings, the same or similar components will be marked by the same or similar reference signs.

### [ Mode for Invention]

Hereinafter, various embodiments of the disclosure are described with reference to the accompanying drawings. However, it is not intended to limit the disclosure to specific embodiments, and it should be understood that various modifications, equivalents, and/or alternatives of embodiments of the disclosure are included.

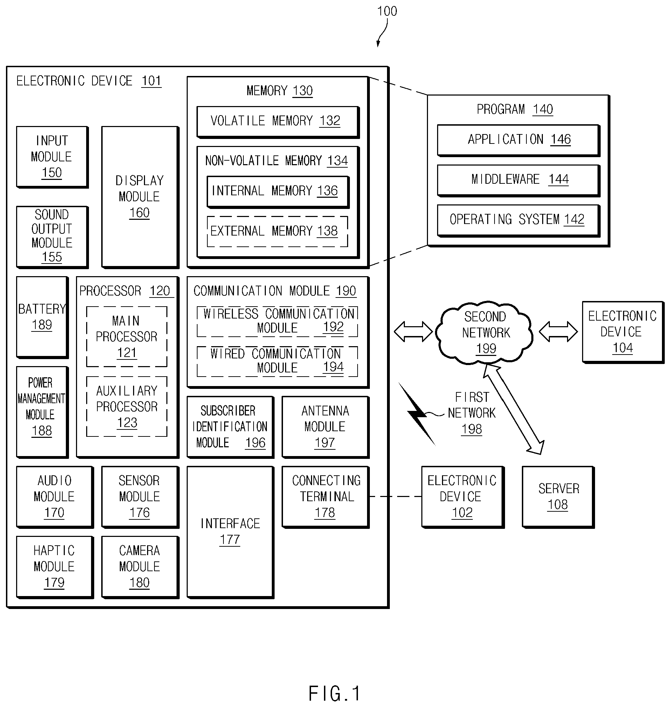

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display module 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display module 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display module 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.
component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The driving unit 181 may move the display module 160 into and/or out of the electronic device 101. The driving unit 181 may control the display module 160 to be converted into a normal mode disposed inside the electronic device 101 and an expanded mode extended to the outside of the electronic device 101. there is. The driving unit 181 may be a slide-type rail structure and/or a motor disposed inside the electronic device 101, but is not limited thereto.

The rotating unit 183 moves the display module 160 into and/or out of the electronic device 101, or when the display module 160 moves into and/or out of the electronic device 101, the display device It may serve as a support for supporting the 160. The rotating unit 183 may be inserted into the rollable display module 160 while being rolled or extended to the outside of the electronic device 101 while the display module 160 is unfolded. The rotating unit 183 may be a cylinder-shaped rotating body disposed on a side surface of the electronic device 101.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

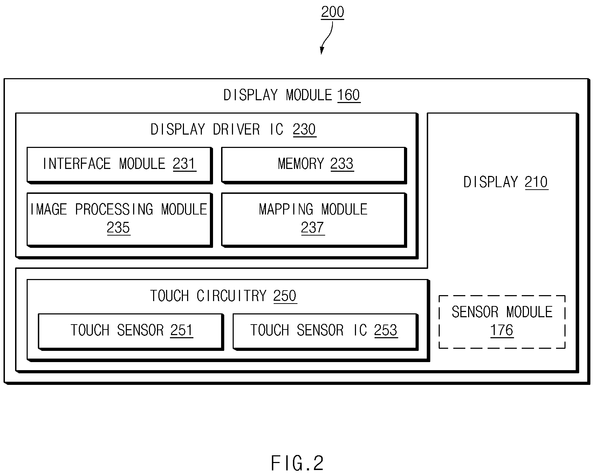

Fig. 2 is a block diagram 200 illustrating the display module 160 according to various embodiments. Referring to Fig. 2, the display module 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 150 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data preprocessed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 150)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display module 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

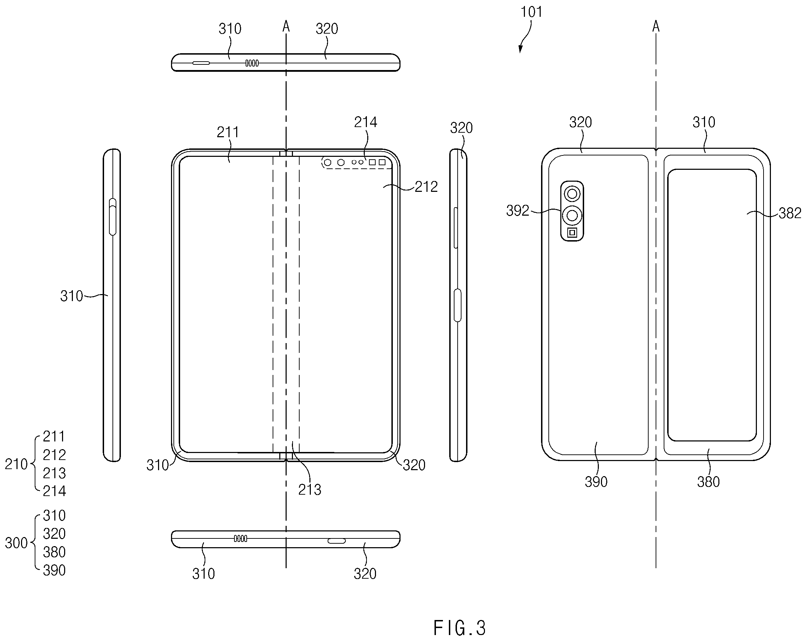

FIG. 3 is a diagram showing an unfolded state of the electronic device 101 according to an embodiment. The electronic device 101 according to an embodiment is the foldable electronic device 101 capable of changing the electronic device 101 and a display 210 into a folded state or an unfolded state.

In one embodiment, the electronic device 101 includes a housing 300, a hinge cover 330 covering a folded portion of the housing 300, and the display 210 disposed in a space formed by the housing 300. In the specification, a side on which the display 210 is disposed is defined as a first side or a front side of the electronic device 101. Further, in the specification, the opposite side of the front side is defined as a second side or a rear side of the electronic device 101. In addition, a side surrounding a space between the front side and the rear side is defined as a third side or a lateral side of the electronic device 101.

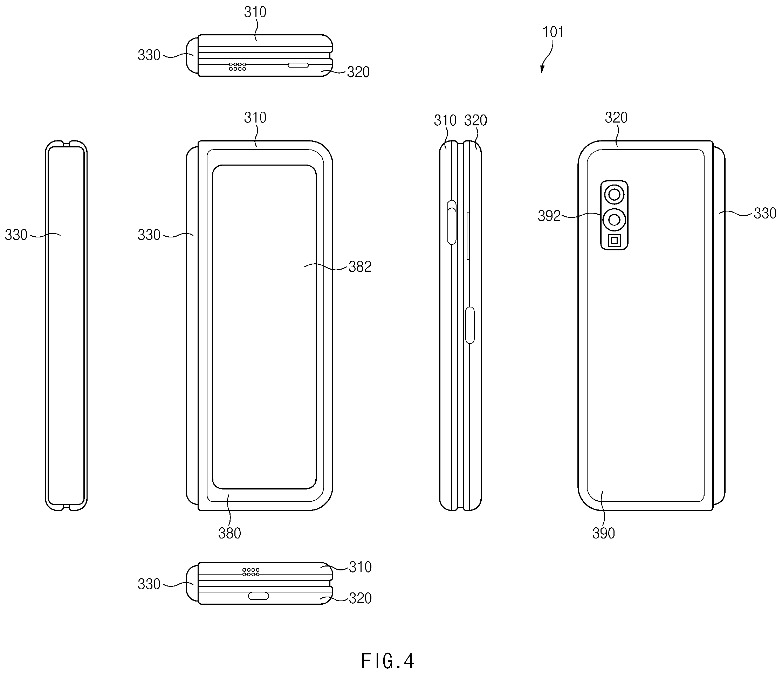

In one embodiment, the housing 300 may include a first front housing 310, a second front housing 320, a first rear cover 380, and a second rear cover 390. The housing 300 may not be limited to the forms and couplings shown in FIGS. 3 and 4. The housing 300 may be implemented by a combination and/or coupling of different shapes or parts. For example, in another embodiment, the first front housing 310 and the first rear cover 380 may be integrally formed. Also, in another embodiment, the second front housing 320 and the second rear cover 390 may be integrally formed.

In one embodiment, the first front housing 310 and the second front housing 320 may be disposed on both sides of a folding axis (A-axis), which is a boundary line along which the electronic device 101 and the display 210 are folded. The first front housing 310 and the second front housing 320 may have generally symmetrical shapes with respect to the folding axis (A-axis). The angle or distance between the first front housing 310 and the second front housing 320 may vary depending on whether the electronic device 101 and the display 210 are in an unfolded state, a folded state, or an intermediate state between the unfolded state and the folded state.

In one embodiment, the first front housing 310 and the second front housing 320 may form a recess accommodating the display 210 together. At least a portion of the first front housing 310 and the second front housing 320 may be formed of a metal material or a non-metal material having rigidity equal to or higher than a predetermined threshold value to support the display 210.

In one embodiment, the display 210 may be disposed in a space formed by the housing 300. For example, the display 210 may be seated on a recess formed by the housing 300. The display 210 may constitute most of the front side of the electronic device 101.

In one embodiment, at least a portion of the display 210 may be deformed into a flat or curved surface. The display 210 may include a folding area 213 that is an folded or unfolded area, a first portion 211 disposed on one side of the folding area 213 (e.g., the left side of the folding area 213 shown in FIG. 3), and a second portion 212 disposed on the other side of the folding area 213 (the right side of the folding area 213 shown in FIG. 3). The division of the area of the display 210 shown in FIG. 3 is an example, and the display 210 may be divided into a plurality of areas according to structures or functions. For example, the area of the display 210 may be divided with respect to the folding area 213 formed long in the vertical direction of the display 210 or the folding axis (A-axis), like the display 210 shown in FIG. 3. As another example, the display 210 may be divided with respect to a folding area formed long in the horizontal direction of the display 210 or another folding axis. The first portion 211 and the second portion 212 may have generally symmetrical shapes around the folding area 213. However, when a sensor area 524 is included in the display 210, the first portion 211 and the second portion 212 may have asymmetrical shapes.

In one embodiment, the display 210 may further include the sensor area 214. The sensor area 214 may be formed to occupy a predetermined area within the second portion 212 of the display 210. However, the sensor area 214 is not limited thereto, and the sensor area 214 may be formed within the first portion 211 or formed in the first portion 211 and the second portion 212 in a divided manner.

In one embodiment, the sensor area 214 may be adjacent to one side edge of the first front housing 310 and/or the second front housing 320. For example, the sensor area 214 may be adjacent to an upper corner of the second front housing 320. The arrangement, shape, and size of the sensor area 214 are not limited to the illustrated example. For example, the sensor area 214 may be formed in a lower corner of the second front housing 320 or an arbitrary area between the upper and lower corners. The sensor area 214 may be disposed at a lower portion of the first portion 211 and/or the second portion 212 of the display 210. The display 210 of FIG. 3 may be an Infinity-O Display in which the sensor area 214 including a front camera is integrally implemented with the first portion 211 and/or the second portion 212 of the display 210 because the entire portion of the display 210 except for the front camera and a sensor hole is implemented as a display area.

In one embodiment, the pixel structure of the first portion 211 and/or the second portion 212 disposed in the upper end of the sensor area 214 may be different from the pixel structure of the remaining first portion 211 and/or second portion 212. For example, the first portion 211 and/or the second portion 212 disposed in the upper end of the sensor area 214 may have a lower pixel density than the remaining first portion 211 and/or second portion 212. As another example, the pixels disposed in the first portion 211 and/or the second portion 212 disposed in the upper end of the sensor area 214 may have a smaller size than pixels disposed in the remaining first portion 211 and/or second portion 212. As another example, the form and/or shape of the pixels arranged in the first portion 211 and/or second portion 212 disposed in the upper end of the sensor area 214 may be narrower or longer compared to the pixels arranged in the remaining first portion 211 and/or second portion 212.

In one embodiment, components for performing various functions embedded in the electronic device 101 may be visually exposed on the front side of the electronic device 101 through the sensor area 214 or one or more openings provided in the sensor area 214. In various embodiments, components may include various types of sensors (e.g., the sensor module 176 of FIG. 1). The sensor may include, for example, at least one of a front camera, a receiver, or a proximity sensor.

In one embodiment, the first rear cover 380 may be disposed on the rear side of the electronic device 101. The first rear cover 380 may be disposed on one side with respect to the folding axis (A-axis). The first rear cover 380 may have a substantially rectangular periphery. The periphery of the first rear cover 380 may be covered by the first front housing 310.

In one embodiment, the second rear cover 390 may be disposed on the rear side of the electronic device 101. The second rear cover 390 may be disposed on the opposite side of the first rear cover 380 with respect to the folding axis (A-axis). The second rear cover 390 may have substantially rectangular periphery. The periphery edge of the second rear cover 390 may be covered by the second front housing 320.

In one embodiment, the first rear cover 380 and the second rear cover 390 may have substantially symmetrical shapes around the folding axis (A-axis). However, the first rear cover 380 and the second rear cover 390 do not necessarily have symmetrical shapes, and in another embodiment, the electronic device 101 may include various shapes of the first rear cover 380 and various shapes of the second rear cover 390. In another embodiment, the first rear cover 380 may be integrally formed with the first front housing 310, and the second rear cover 390 may be integrally formed with the second front housing 320.

In one embodiment, the front side of the electronic device 101 may include the display 210, a partial area of the first front housing 310 adjacent to the display 210, and a partial area of the second front housing 320. The rear side of the electronic device 101 may include the first rear cover 380, a partial area of the first front housing 310 adjacent to the first rear cover 380, the second rear cover 390, and a partial area of the second front housing 320 adjacent to the second rear cover 390.

In one embodiment, the first front housing 310, the second front housing 320, the first rear cover 380, and the second rear cover 390 may form a space capable of accommodating various components (e.g., a printed circuit board (PCB) or a battery).

In one embodiment, one or more components may be disposed or visually exposed on the rear side of the electronic device 101. For example, at least a portion of a sub-display 382 may be visually exposed through the first rear cover 380. As another example, at least a portion of a rear sensor module 392 (e.g., the sensor module 176 of FIG. 1) may be visually exposed through the second rear cover 390. The rear sensor module 392 may include a proximity sensor and/or a rear camera.

In one embodiment, when the electronic device 101 is in an unfolded state, the first front housing 310 and the second front housing 320 may be arranged to face the same direction while forming an angle of about 180 degrees. When the display 210 is in the unfolded state, the surface of the first portion 211 and the surface of the second portion 212 of the display 210 may form an angle of about 180 degrees to each other. When the display 210 is in the unfolded state, the first portion 211 and the second portion 212 of the display 210 may face the same direction (e.g., the front direction of the electronic device 101). When the display 210 is in an unfolded state, the folding area 213 may form the same plane as the first portion 211 and the second portion 212.

FIG. 4 is a diagram showing a folded state of the electronic device 101 according to an embodiment.

In one embodiment, the hinge cover 330 may be disposed between the first front housing 310 and the second front housing 320. The hinge cover 330 may cover a portion between the first front housing 310 and the second front housing 320. The hinge cover 330 may cover a hinge structure between the first front housing 310 and the second front housing 320. The hinge cover 330 may be covered by parts of the first front housing 310 and the second front housing 320 when the electronic device 101 is in an unfolded state. The hinge cover 330 may be exposed to the outside when the electronic device 101 is in a folded state. The hinge cover 530 may include a curved surface.

In one embodiment, when the electronic device 101 is in the folded state, the first front housing 310 and the second front housing 320 may be disposed to face each other. When the display 210 is in the folded state, the surface of the first portion 211 and the surface of the second portion 212 of the display 210 may form a narrow angle (e.g., between 0 degrees and about 10 degrees). When the display 210 is in the folded state, the first portion 211 and the second portion 212 of the display 210 may face each other. When the display 210 is in a folded state, at least a portion of the folding area 213 may change to a curved surface having a first curvature.

In one embodiment, when the electronic device 101 is in the intermediate state between the unfolded state and the folded state, the first front housing 310 and the second front housing 320 may be disposed at an angle falling within a range of 0 degrees to less than 180 degrees. When the display 210 is in the intermediate state, the surface of the first portion 211 and the surface of the second portion 212 of the display 210 may form an angle greater than that of the folded state and smaller than that of the unfolded state. When the display 210 is in the intermediate state, at least a portion of the folding area 213 may change to a curved surface having a second curvature. The second curvature may be smaller than the first curvature.

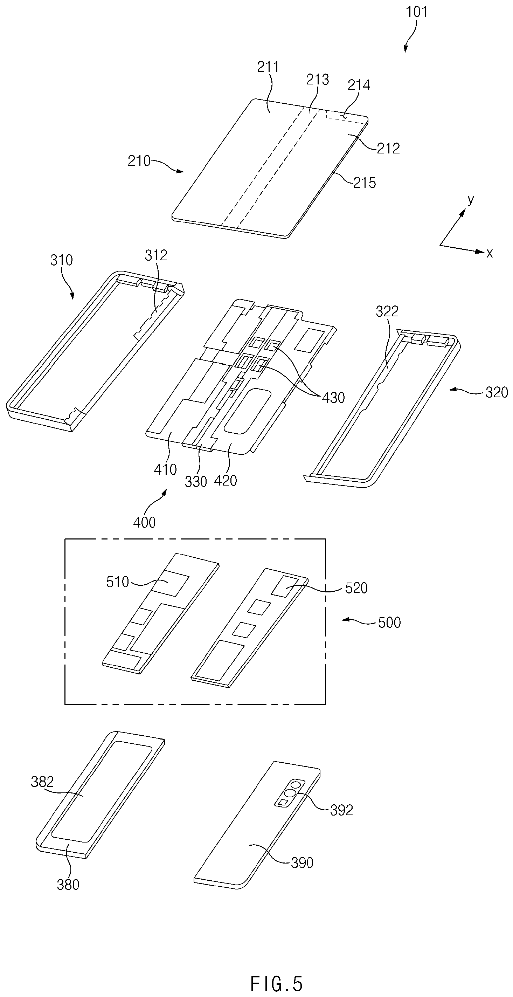

FIG. 5 is an exploded perspective view of the electronic device 101 according to an embodiment. The electronic device 101 according to an embodiment may include the display 210, a bracket assembly 400, a board portion 500, the first front housing 310, the second front housing 320, the first rear cover 380 and the second rear cover 390.

In one embodiment, the display 210 may include the first portion 211, the second portion 212, the folding area 213, the sensor area 214, and a layer structure 215.

In one embodiment, the layer structure 215 may seat display 210 in a recess of the housing 330. The layer structure 215 may be comprised of one or more plates. The layer structure 215 may be disposed on the bracket assembly 400.

In one embodiment, the bracket assembly 400 may be disposed between the layer structure 215 and the board portion 500. The bracket assembly 400 may include a first bracket 410, a second bracket 420, the hinge cover 330 disposed between the first bracket 410 and the second bracket 420, and a wiring member 430 crossing the first bracket 410 and the second bracket 420.

In one embodiment, the first bracket 410 may be disposed between the first portion 211 of the display 210 and a first board 510 of the board portion 500. The second bracket 420 may be disposed between the second portion 212 of the display 210 and a second board 520 of the board portion 500.

In one embodiment, the wiring member 430 may be disposed in a direction (e.g., an x-axis direction) crossing the first bracket 410 and the second bracket 420. The wiring member 430 may be disposed in a direction (e.g., the x-axis direction) perpendicular to the folding axis (e.g., a y-axis or the folding axis (A-axis) of FIG. 3) of the folding area 213 of the electronic device 101. The wiring member 430 may be a flexible printed circuit board (FPCB).

In one embodiment, the board portion 500 may include the first board 510 disposed on the side of the first bracket 410 and the second board 520 disposed on the side of the second bracket 420. The first board 510 and the second board 520 may be disposed inside a space formed by the bracket assembly 400, the first front housing 310, the second front housing 320, the first rear cover 380, and the second rear cover 390. Components for realizing various functions of the electronic device 101 may be disposed on the first board 510 and the second board 520.

In one embodiment, the first front housing 310 and the second front housing 320 may be assembled to each other to be coupled to both sides of the bracket assembly 400 in a state where the display 210 is coupled to the bracket assembly 400. The first front housing 310 and the second front housing 320 may be coupled to the bracket assembly 400 by sliding on both sides of the bracket assembly 400.

In one embodiment, the first front housing 310 may include a first rotation support surface 312. The second front housing 320 may include a second rotation support surface 322 corresponding to the first rotation support surface 312. The first rotation support surface 312 and the second rotation support surface 322 may include a curved surface corresponding to the curved surface included in the hinge cover 330.

In one embodiment, the first rotation support surface 312 and the second rotation support surface 322 may cover the hinge cover 330 when the electronic device 101 is the unfolded state (e.g., the electronic device 101 of FIG. 3). Accordingly, when the electronic device 101 is in the unfolded state, the hinge cover 330 may not be exposed or minimally exposed to the rear side of the electronic device 101.

In one embodiment, the first rotation support surface 312 and the second rotation support surface 322 may rotate along the curved surface included in the hinge cover 330 when the electronic device 101 is in the folded state (e.g., the electronic device 101 of FIG. 4). Accordingly, when the electronic device 101 is in the folded state, the hinge cover 530 may be maximally exposed to the rear side of the electronic device 101.

An electronic device according to an embodiment (e.g., the electronic device 101 of FIGS. 1 and 3 to 5) includes a folded state and an unfolded state. The electronic device 101 may be a foldable electronic device. The electronic device 101 includes a housing (e.g., the housing 300 of FIG. 3) including a first side (front side) that is covered in the folded state and visible to the outside in the unfolded state and a second side (rear side) facing in an opposite direction to the first side in the unfolded state. The electronic device 101 includes a main display (e.g., the display 210 of FIGS. 2 to 5) that is externally visible through the first side in the unfolded state. The electronic device 101 includes a sub-display (e.g., the sub-display 382 of FIGS. 3 to 5) disposed in a first area (e.g., the first rear cover 380 of FIGS. 3 to 5) of the second side. The electronic device 101 includes a sensor module (e.g., the sensor module 176 of FIG. 1). The electronic device 101 includes the main display 210, the sub-display 382, and a processor operatively connected to the sensor module 176 (e.g., the processor 120 of FIG. 1).

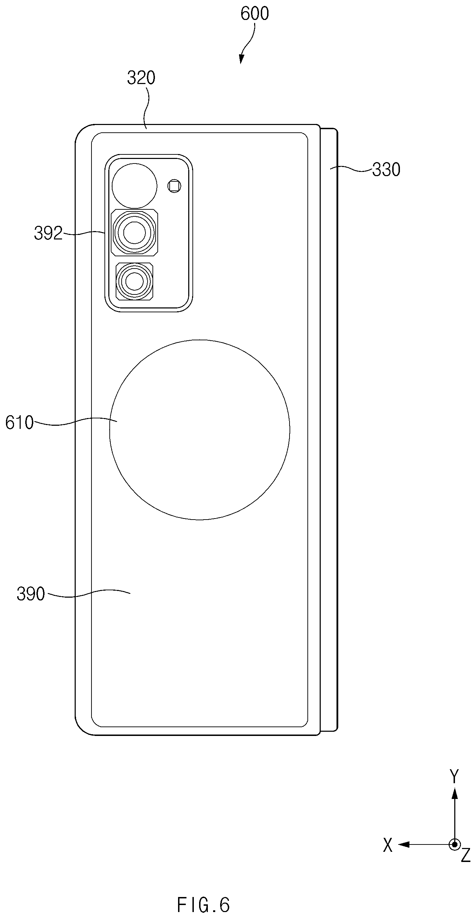

FIG. 6 is a diagram 600 illustrating a charger 610 for an electronic device (e.g., the electronic device 101 of FIGS. 1 and 3 to 5) according to an embodiment.

In one embodiment, the electronic device 101 may be in a folded state. The electronic device 101 may be disposed such that the second front housing 320 of a housing (e.g., the housing 300 of FIG. 3) faces a first direction (-Z-axis direction). When the second front housing 320 faces in the first direction (-Z-axis direction), the second rear cover 390 of the housing 300 may face a second direction (+Z-axis direction) opposite to the first direction (-Z-axis direction). The rear sensor module 392 disposed in the second rear cover 390 may face the second direction (+Z-axis direction).

In one embodiment, the charger 610 is disposed in a second area of the second side (rear side) of the housing 300. The second area may be a different area from the first area where the sub-display (e.g., the sub-display 382 of FIGS. 3 to 5) is disposed. The charger 610 may be disposed in a rear housing portion 390 different from the rear housing portion 380 where the sub-display 382 is disposed. The charger 610 may face the second direction (+Z-axis direction).

In one embodiment, the first area may be an area where the first rear cover (e.g., the first rear cover 380 of FIGS. 3 to 5) of the second side of the housing 300 is disposed. The second area may be an area where the second rear cover 390 of the second side of the housing 300 is disposed. The first area and the second area may be arranged on opposite sides of each other with respect to a folding axis (e.g., the folding axis (A-axis) in FIG. 3), which is a boundary line along which the main display (e.g., the display 210 of FIGS. 2 to 5 ) is folded.

In one embodiment, the charger 610 may receive power from a battery (e.g., the battery 189 of FIG. 1). The charger 610 may wirelessly emit power in the second direction (+Z-axis direction). A distance at which the charger 610 emits power may be a short distance of about 10 cm or less.

In one embodiment, the charger 610 may include a charging coil. The charging coil may generate induced power by electromagnetic induction. The charging coil may wirelessly emit the induced power.

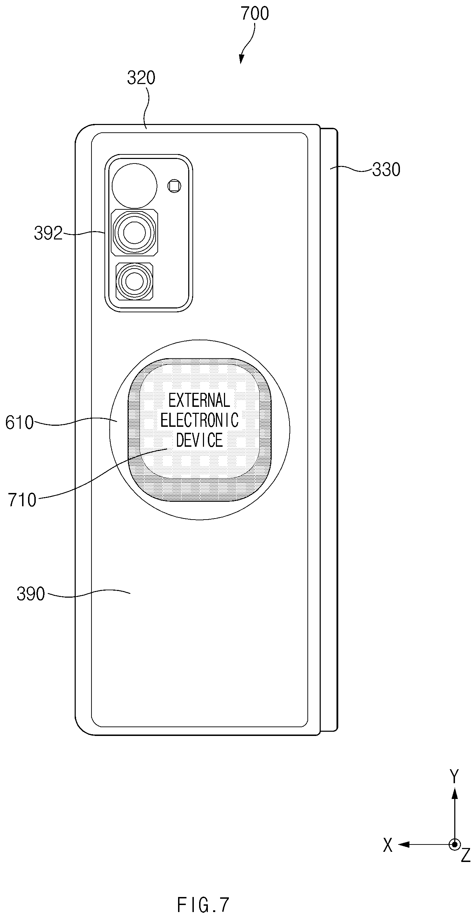

FIG. 7 is a diagram 700 illustrating that an external electronic device 710 exists in the charger 610 of an electronic device (e.g., the electronic device 101 of FIGS. 1 and 3 to 5) according to an embodiment.

In an embodiment, the external electronic device 710 may exist in the charger 610 when the electronic device 101 is in the folded state. The external electronic device 710 may be placed on the charger 610. The external electronic device 710 may be placed adjacent to the charger 610 in the second direction (-Z-axis direction). The external electronic device 710 may be a different electronic device from the electronic device 101. For example, the external electronic device 710 may be another portable electronic device such as a smart phone. As another example, the external electronic device 710 may be a wearable electronic device such as a smart watch, a band, and a Bluetooth headset.

In one embodiment, the electronic device 101 may wirelessly transmit power to the external electronic device 710. A processor of the electronic device 101 (e.g., the processor 120 of FIG. 1) may wirelessly transmit power to the external electronic device 710 using the charger 610. The electronic device 101 may charge the external electronic device 710. The electronic device 101 may share power wirelessly with the external electronic device 710.

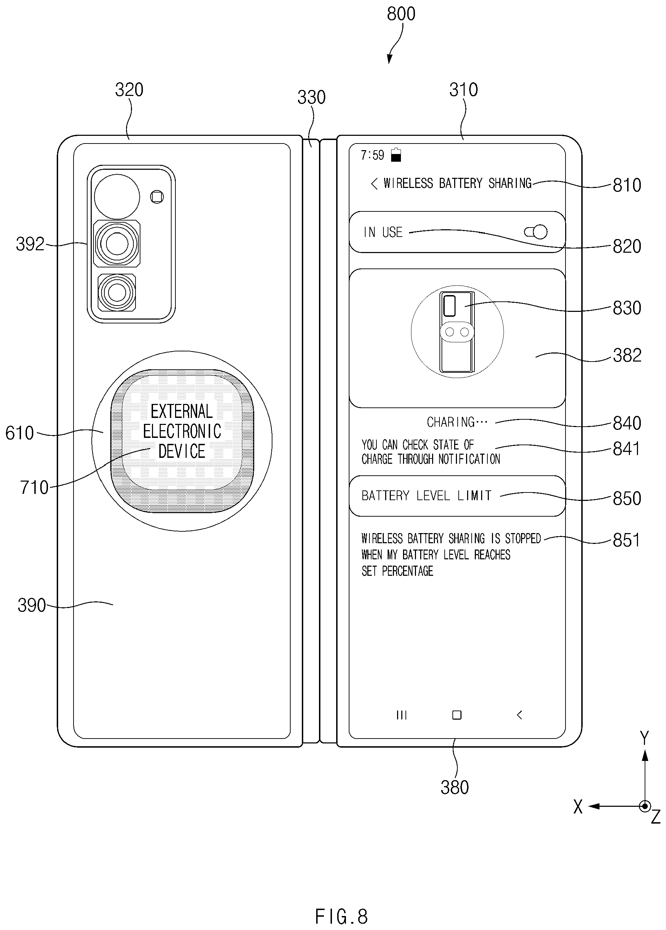

FIG. 8 is a diagram 800 illustrating that an electronic device (e.g., the electronic device 101 of FIGS. 1 and 3 to 5) according to an embodiment supplies power to the external electronic device 701.

In one embodiment, the first side (front side) of the electronic device 101 may be placed on an external ground in the unfolded state. The external ground may be a reference plane supporting the electronic device 101 from below. For example, the external ground may be a floor. As another example, the external ground may be a desk or table top. When the external ground is a surface supporting the electronic device 101 in the first direction (-Z-axis direction), the first side (front side) of the electronic device 101 may be placed on the external ground. The electronic device 101 may be disposed such that the first front housing 310 and the second front housing 320 of the housing (e.g., the housing 300 of FIG. 3) face the first direction (-Z axis direction).

In one embodiment, the processor (e.g., the processor 120 of FIG. 1) determines whether the electronic device 101 is in the unfolded state or the folded state by using a sensor module (e.g., the sensor module 176 of FIG. 1). For example, the sensor module 176 may include a Hall sensor. The processor 120 may determine whether the electronic device 101 is in the unfolded state or the folded state by using a hall sensor.

In one embodiment, the processor 120 determines whether the first side (front side) of the electronic device 101 is placed on an external ground by using the sensor module 176. For example, the sensor module 176 may include at least one of an acceleration sensor, a gyro sensor, a proximity sensor, an illuminance sensor, and a geomagnetic sensor. The processor 120 may determine whether the first side (front side) of the electronic device 101 is placed on an external ground by using at least one of an acceleration sensor, a gyro sensor, a proximity sensor, an illuminance sensor, and a geomagnetic sensor. For example, the processor 120 may determine whether the first side (front side) of the electronic device 101 faces the external ground by using an acceleration sensor. As another example, the processor 120 may determine whether the first side (front side) of the electronic device 101 faces the floor by using a gyro sensor. As still another example, the processor 120 may determine whether the first side (front side) of the electronic device 101 is adjacent to an external object by using a proximity sensor. As still another example, the processor 120 may determine whether an external environment facing the first side (front side) of the electronic device 101 is darkened by the external ground by using an illuminance sensor. As still another example, the processor 120 may determine whether a direction in which the electronic device 101 is placed is a direction in which the first side (front side) faces downward by using a geomagnetic sensor. However, the disclosure is not limited thereto, and the electronic device 101 may determine whether the first side (front side) of the electronic device 101 is placed on the external ground by using at least one sensor included in the sensor module 176.

In one embodiment, when the first front housing 310 and the second front housing 320 face in the first direction (-Z-axis direction), the main display (e.g., the display 210 of FIGS. 2 to 5) may face the first direction (-Z-axis direction). When the first direction (-Z-axis direction) is downward or toward the external ground, the main display 210 may not be visible to a user. For example, when the electronic device 101 is placed on the floor in the unfolded state, the main display 210 may not be visible to the user.

In one embodiment, when the first side (front side) of the electronic device 101 is placed on an external ground in the unfolded state, the first front housing 310 and the second front housing 320 of the housing 300 may face the first direction (-Z-axis direction). When the first front housing 310 and the second front housing 320 of the housing 300 face the first direction (-Z-axis direction), the first rear cover 380 and the second rear cover 390 of the housing 300 may face a second direction (+Z-axis direction) opposite to the first direction (-Z-axis direction). The sub-display 382 disposed on the first rear cover 380 and the charger 610 disposed on the second rear cover 390 may face the second direction (+Z-axis direction).

In one embodiment, the external electronic device 710 may exist in the charger 610. The external electronic device 710 may be placed in the second direction (+Z-axis direction) on the charger 610.

In one embodiment, the processor 120 determines whether the external electronic device 710 exists in the charger 610 in response to the electronic device 101 being in the unfolded state and the first side (front side) being placed on an external ground. The processor 120 may periodically determine whether the external electronic device 710 exists. For example, the user may preset a cycle at which the processor 120 determines whether the external electronic device 710 exists. As another example, a cycle at which the processor 120 determines whether the external electronic device 710 exists may be set according to the remaining capacity of the battery (e.g., the battery 189 of FIG. 1).

In one embodiment, the processor 120 turns on the screen of the sub-display 382 in response to the existence of the external electronic device 710 on the charger 610. The processor 120 turns on the screen of the sub-display 382 based on detection that the external electronic device 710 is placed on the charger 610. When the external electronic device 710 is placed on the charger 610, the processor 120 determines that the electronic device 101 is placed in a state in which the user cannot view the main display (e.g., the display 210 of FIGS. 2 to 5), and turns on the screen of the sub-display 382. The processor 120 turns on the screen of the sub-display 382 such that the user is able to use the screen of the sub-display 382 even when the external electronic device 710 is placed on the charger 610.

In one embodiment, the processor 120 wirelessly supplies power to the external electronic device 710 using the charger 610. The processor 120 maintains the screen of the sub-display 382 turned on while supplying power to the external electronic device 710. The sub-display 382 may display a charge state of the external electronic device 710. For example, the sub-display 382 may display at least one of a wireless battery sharing interface 810, an in-use notification interface 820, an interface 830 for notifying a type of the external electronic device 710 placed on the charger 610, a charging notification interface 840, a charging notification guide message 841, a battery level interface 850, and a message 851 notifying wireless battery sharing stop according to a battery level. However, the present disclosure is not limited thereto, and the sub-display 382 may display whether the external electronic device 710 is being normally charged. The sub-display 382 may display how much capacity of the battery 189 of the electronic device 101 remains. As another example, when the processor 120 receives data related to the charging level of the external electronic device 710 using a communication circuit (e.g., the wireless communication circuit 192 of FIG. 1), the sub-display 382 may display the charging level of the external electronic device 710.

In one embodiment, the sub-display 382 may display an execution screen of a function and/or an application executed by the electronic device 101. For example, the sub-display 382 may display a home screen. As another example, the sub-display 382 may display the screen of a list of messages received by a message application. The user may use a function of the electronic device 101 or execute an application while the external electronic device 710 is placed on the charger 610.

In one embodiment, the processor 120 may be configured to display a screen through the main display 210 when the electronic device 101 is in the unfolded state in response to the charger 610 detecting the external electronic device 710 in a state where the first side (front side) is in the space. The processor 120 may be configured to block display of the screen through the sub-display 382 when the electronic device 101 is in the unfolded state in responds to the charger 610 detecting the external electronic device 710 in a state where the first side (front side) is in space. For example, the processor 120 may determine that the external electronic device 710 is brought close to the second side (rear side) of the electronic device 101 for a purpose other than charging when the first side (front side) is in space. As another example, the processor 120 may determine that the external electronic device 710 is brought close to the charger 610 of the second side (rear side) while the user uses the electronic device 101 through the main display 210 when the first side (front side) is in space.

In one embodiment, a memory (e.g., the memory 130 of FIG. 1) of the electronic device 101 may store at least one registered near field communication ID (NFC ID). The memory 130 may register at least one or more near field communication IDs of other electronic devices.

In one embodiment, the communication circuit 192 of the electronic device 101 may perform near field communication with nearby electronic devices. The communication circuit 192 of the electronic device 101 may identify near field communication IDs of nearby electronic devices.

In one embodiment, the processor 120 may be configured to identify the near field communication ID of the external electronic device 710 using the communication circuit 192 in response to the existence of the external electronic device 710 in the charger 610. The processor 120 may compare the near field communication ID of the external electronic device 710 with at least one registered near field communication ID stored in the memory 130. The type and model of the external electronic device 710 placed on the charger 610 may be identified.

In one embodiment, the processor 120 may be configured to supply power to the external electronic device 710 using the charger 610 in response to the near field communication ID of the external electronic device 710 matching at least one registered near field communication ID stored in the memory 130. The processor 120 may be configured to automatically start charging the external electronic device 710 when the external electronic device 710 placed on the charger 610 has a registered near field communication ID.

In one embodiment, the processor 120 may be configured to display a user interface for checking whether or not to supply power to the external electronic device 710 on the screen of the sub-display 382 in response to the near field communication ID of the external electronic device 710 being different from at least one registered near field communication ID stored in the memory 130 or a time required for the communication circuit 192 to establish near field communication with the external electronic device 710 having passed a threshold time. For example, when the external electronic device 710 placed on the charger 610 has an unregistered near field communication ID, the processor 120 may display a user interface for checking whether to start charging the external electronic device 710 on the screen of the sub-display 382. As another example, when the external electronic device 710 placed on the charger 610 is unable to perform near field communication with the communication circuit 192, the processor 120 may display a user interface for checking whether to start charging the external electronic device 710 on the screen of the sub-display 382.

In one embodiment, the processor 120 may be configured to supply power to the external electronic device 710 using the charger 610 in response to selecting wireless power sharing to supply power to the external electronic device 710 through the user interface for checking whether to start charging the external electronic device 710. The processor 120 may be configured to start charging the external electronic device 710 in response to selecting a menu for supplying power to the external electronic device 710 through the user interface.

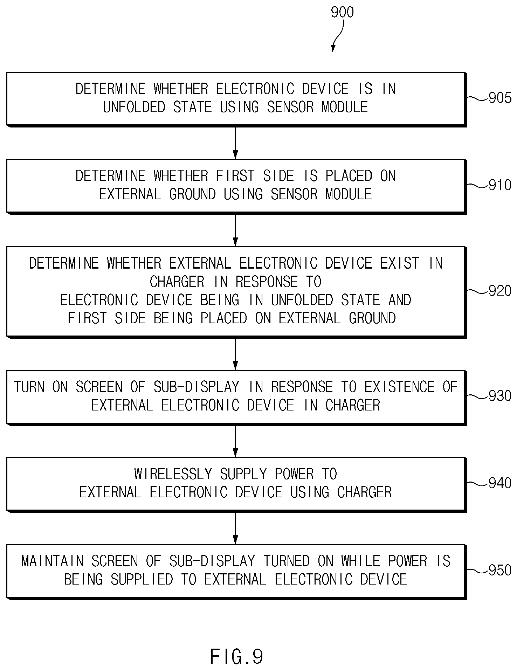

FIG. 9 is a flowchart 900 showing a method of supplying power to an external electronic device (e.g., the external electronic device 710 of FIGS. 7 and 8) using an electronic device (e.g., the electronic device 101 of FIGS. 1 and 3 to 5) according to an embodiment.

In operation 905, the processor (e.g., processor 120 of FIG. 1) of the electronic device 101 according to an embodiment determines whether the electronic device 101 is in the unfolded state by using a sensor module (e.g., the sensor module 176 of FIG. 1) of the electronic device 101. For example, the processor 120 may determine whether the electronic device 101 is in the unfolded state by using a hall sensor.

In operation 910, the processor 120 according to an embodiment determines whether the first side (front side) of the housing of the electronic device 101 (e.g., the housing 300 of FIG. 3) is placed on an external ground using the sensor module 176. For example, the processor 120 may determine whether the first side (front side) is placed on the floor using at least one of an acceleration sensor, a gyro sensor, a proximity sensor, an illuminance sensor, and a geomagnetic sensor included in the sensor module 176.

In operation 920, the processor 120 according to an embodiment determines whether the external electronic device 710 exists in a charger (e.g., the charger 610 of FIGS. 6 to 8) of the electronic device 101 in response to the electronic device 101 being in the unfolded state and the first side (front side) being placed on an external ground. The processor 120 may determine whether the external electronic device 710 exists in the charger 610 at every specified cycle.

In operation 930, the processor 120 according to an embodiment turns on the screen of the sub-display 382 of the electronic device 101 (e.g., the sub-display 382 of FIGS. 3 to 5 and 8) in response to the existence of the external electronic device 710 in the charger 610.

In operation 940, the processor 120 according to an embodiment wirelessly supplies power to the external electronic device 710 using the charger 610.

In operation 950, the processor 120 according to an embodiment maintains the screen of the sub-display 382 turned on while supplying power to the external electronic device 710. The sub-display 382 may display a screen related to a state of charge. The sub-display 382 may display a screen related to the function of the electronic device 101. The sub-display 382 may display a screen of an application running on the electronic device 101.

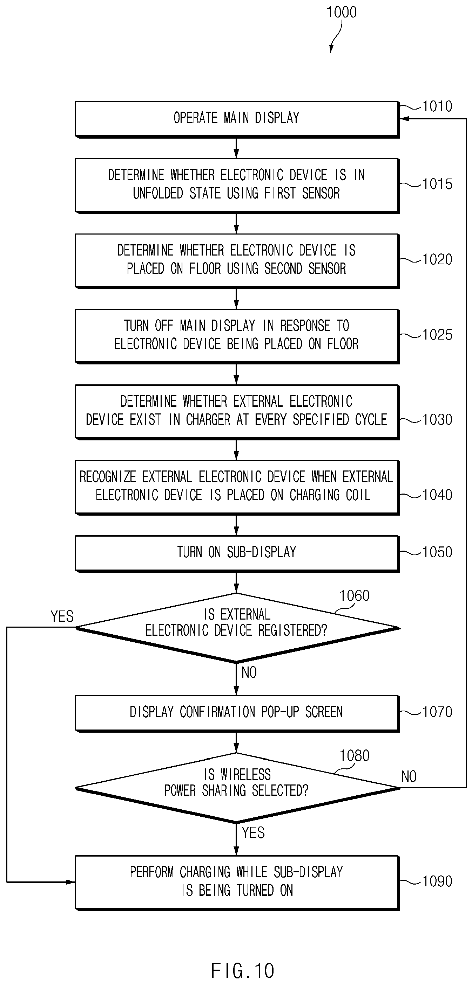

FIG. 10 is a flowchart 1000 showing a method of charging an external electronic device (e.g., the external electronic device 101 of FIGS. 7 and 8) using an electronic device (e.g., the electronic device 101 of FIGS. 1 and 3 to 5) according to an embodiment.

In operation 1010, the processor (e.g., the processor 120 of FIG. 1) of the electronic device 101 according to an embodiment may operate a main display (e.g., the display 210 of FIGS. 2 to 5). The processor 120 may turn on the main display 210 when the electronic device 101 is in an unfolded state. The main display 210 may display a screen related to a function of the electronic device 101. The main display 210 may display a screen of an application running on the electronic device 101.

In operation 1015, the processor 120 according to an embodiment determines whether the electronic device 101 is in the unfolded state by using a first sensor included in a sensor module (e.g., the sensor module 176 of FIG. 1). The first sensor may be a hall sensor. The processor 120 may proceed to operation 1020 when the electronic device 101 is in the unfolded state.

In operation 1020, the processor 120 according to an embodiment determines whether a first side (front side) of the electronic device 101 is placed on the floor using a second sensor included in the sensor module 176. The second sensor may be an acceleration sensor, a gyro sensor, a proximity sensor, an illuminance sensor, and/or a geomagnetic sensor. The processor 120 may proceed to operation 1025 when the first side (front side) of the electronic device 101 is placed on the floor.

In operation 1025, the processor 120 according to an embodiment may turn off the main display 210 in response to a state in which the electronic device 101 is placed on the floor. When the processor 120 detects that the first side (front side) of the electronic device 101 is placed on the floor, the processor 120 may cause the main display 210 to stop displaying the screen. When the first side (front side) of the electronic device 101 is placed on the floor, the processor 120 may turn off the main display 210 to reduce unnecessary operation or power consumption in the main display 210.

In operation 1030, the processor 120 according to an embodiment determines whether the external electronic device 710 exists at every specified cycle. The processor 120 determines whether or not a device to be charged is present at specific time intervals. The processor 120 may proceed to operation 1040 when the external electronic device 710 exists.

In operation 1040, the processor 120 according to an embodiment may recognize the external electronic device 710 when the external electronic device is placed on a charging coil (e.g., the charger 610 of FIGS. 6 to 8).

In operation 1050, the processor 120 according to an embodiment turns on a sub-display (e.g., the sub-display 382 of FIGS. 3 to 5 and 8). The processor 120 turns on the sub-display 382 when an external electronic device is placed on the charger 610.

In operation 1060, the processor 120 according to an embodiment may determine whether the external electronic device 1060 is registered. The processor 120 may identify a near field communication ID of the external electronic device 710 by using the communication circuit (e.g., the wireless communication circuit 192 of FIG. 1) of the electronic device 101 in response to the existence of the external electronic device 710. The processor 120 may determine that the external electronic device 710 is registered when the near field communication ID of the external electronic device 710 matches at least one registered near field communication ID stored in the memory of the electronic device 101 (e.g., the memory 130 of FIG. 1). When the external electronic device 710 is registered (operation 1060 - YES), the processor 120 may proceed to operation 1090. The processor 120 may proceed to operation 1070 when the external electronic device 710 is not registered or it is hard to determine whether the external electronic device 710 is registered (operation 1060 - NO).

In operation 1070, the processor 120 according to an embodiment may display a confirmation pop-up screen. The confirmation pop-up screen may include a user interface for checking whether to supply power to the external electronic device 710. When the external electronic device 710 is not registered or it is hard to determine whether the external electronic device 710 is registered, the processor 120 may display a user interface for checking whether to supply power to the external electronic device 710 on the screen of the sub-display 382.

In operation 1080, the processor 120 according to an embodiment may determine whether wireless power sharing is selected. The processor 120 may determine whether the user selects a menu for performing wireless power sharing or a menu for blocking wireless power sharing on the confirmation pop-up screen. When wireless power sharing is selected (operation 1080 - YES), the processor 120 may proceed to operation 1090. When blocking of wireless power sharing is selected (operation 1080 - NO), the processor 120 may return to operation 1010 and operate the main display 210.

In operation 1090, the processor 120 according to an embodiment performs charging while maintaining the sub-display 382 turned on. When the external electronic device 1060 is registered (operation 1060 - YES), the processor 120 may automatically charge the external electronic device 710 using the charger 610. When the external electronic device 710 is not registered or it is hard to determine whether the external electronic device 710 is registered (Operation 1060 - NO) and wireless power sharing is selected on the confirmation pop-up screen (Operation 1080 - YES), the processor 120 may charge the external electronic device 710 using the charger 610.

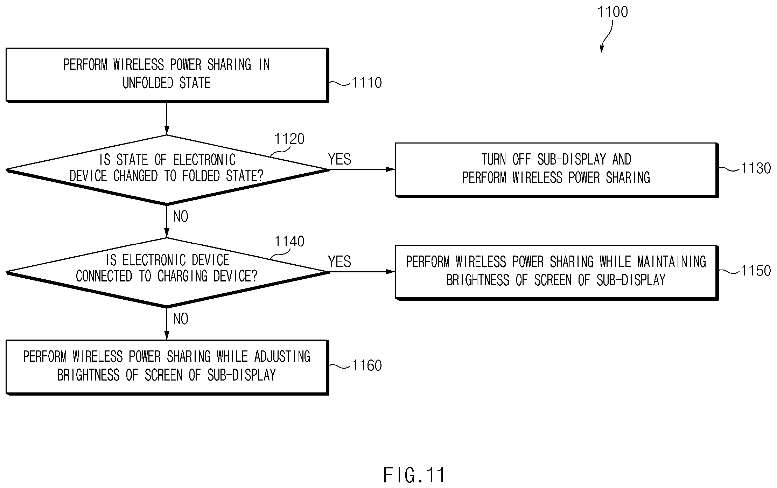

FIG. 11 is a flowchart 1100 showing a method of performing wireless power sharing while controlling a sub-display (e.g., the sub-display 382 of FIGS. 3 to 5 and 8) based on a state of an electronic device (e.g., the electronic device 101 of FIGS. 1, and 3 to 5) and whether the electronic device is connected to a charging device.

In operation 1110, the processor (e.g., the processor 120 of FIG. 1) of the electronic device 101 according to an embodiment performs wireless power sharing in an unfolded state. The processor 120 wirelessly supplies power to the external electronic device 710 (e.g., the external electronic device 710 of FIGS. 7 and 8) using a charger (e.g., the charger 610 of FIGS. 6 to 8) in a state where the first side (front side) faces an external ground in the unfolded state. The processor 120 is configured to maintain the screen of the sub-display 382 turned on while supplying power to the external electronic device 710.

In operation 1120, the processor 120 according to an embodiment may identify whether the state of the electronic device 101 is changed to a folded state. The sensor module (e.g., the sensor module 176 of FIG. 1) of the electronic device 101 may include a hall sensor. The processor 120 may identify whether the state of the electronic device 101 is changed into a folded state by using a hall sensor. When the state of the electronic device 101 is changed to the folded state (operation 1120 - YES), the processor 120 may proceed to operation 1130. The processor 120 may proceed to operation 1140 when the state of the electronic device 101 is maintained unfolded (operation 1120 - NO).

In operation 1130, the processor 120 according to an embodiment may turn off the sub-display 382 and perform wireless power sharing. When the electronic device 101 is changed into the folded state, the processor 120 may determine that the sub-display 382 is not used while the external electronic device 710 is being charged and turn off the sub-display 382.

In operation 1140, the processor 120 according to an embodiment may determine whether the electronic device 101 is connected to a charging device. The processor 120 may determine whether the electronic device 101 is connected to the charging device using a power management module (e.g., the power management module 188 of FIG. 1) and an interface (e.g., the interface 177 of FIG. 1). The charging device may be a wired charging device. However, the charging device is not limited thereto and may be an auxiliary battery or a wireless charging pad. The processor 120 may proceed to operation 1150 when the electronic device 101 is connected to the charging device (operation 1140 - YES). The processor 120 may proceed to operation 1160 when the electronic device 101 is not connected to the charging device (operation 1140 - NO).

In operation 1150, the processor 120 according to an embodiment may perform wireless power sharing while maintaining the brightness of the screen of the sub-display 382. When the electronic device 101 is connected to the charging device, the processor 120 may determine that the electronic device 101 receives additional power from the outside. The processor 120 may maintain the brightness of the screen of the sub-display 382 while performing wireless power sharing based on receiving additional power from the outside.

In operation 1160, the processor 120 according to an embodiment may perform wireless power sharing while adjusting the brightness of the screen of the sub-display 382. The processor 120 may perform wireless power sharing while the brightness of the screen of the sub-display 382 has been reduced. When the electronic device 101 is not connected to a charging device, the processor 120 may determine that the electronic device 101 uses a battery (e.g., the battery 189 of FIG. 1) and receives no power from the outside. The processor 120 may adjust the brightness of the screen of the sub-display 382 during wireless power sharing to adjust the use speed of the battery 189 and secure the use time of the electronic device 101.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other feature (e.g., importance or order). It is to be understood that when an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

In various embodiments, each component (e.g., a module or a program) of the above-described components may include a single entity or multiple entities, and some of the multiple entities may be separately disposed in different components. In various embodiments, one or more of the above-described components may be omitted, or one or more other components may be added. In alternative or additional embodiments, a plurality of components (e.g., modules or programs) may be integrated into a single component. In such a case, in various embodiments, the integrated component may still perform one or more functions of each of the plurality of components in the same or similar manner as they are performed by a corresponding one of the plurality of components before the integration. In various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) including a folded state and an unfolded state, comprising:
a housing (300) including:
a first side which is covered in the folded state and visible to outside in the unfolded state; and
a second side which faces a direction opposite to the first side in the unfolded state;
a main display (210) externally visible to the outside through the first side in the unfolded state;
a sub-display (382) disposed in a first area of the second side;
a charger (610) disposed in a second area of the second side;
a sensor module (176); and
a processor (120) operatively connected to the main display (210), the sub-display (382), the charger (610), and the sensor module (176),
wherein the processor (120) is arranged to:
determine (905) whether the electronic device (101) is in the unfolded state using the sensor module (176);
determine (910) whether the first side is placed on an external ground using the sensor module (176);
determine whether an external electronic device (710) exists in the charger (610) in response to the electronic device (101) being in the unfolded state and the first side being placed on the external ground;
turn on a screen of the sub-display (382) in response to existence of the external electronic device (710) in the charger;
wirelessly supply power to the external electronic device (710) using the charger (610); and
maintain the screen of the sub-display (382) turned on while supplying the power to the external electronic device (710).

2. The electronic device of claim 1, wherein a first rear cover of the second side of the housing is disposed in the first area,
wherein a second rear cover of the second side of the housing is disposed in the second area, and
wherein the first area and the second area are disposed on opposite sides of a folding axis, which is a boundary line along which the main display is folded.

3. The electronic device of claim 1, wherein the charger includes a charging coil.

4. The electronic device of claim 1, wherein the sensor module includes at least one of an acceleration sensor, a gyro sensor, a proximity sensor, an illuminance sensor, and a geomagnetic sensor, and
wherein the processor is arranged to determine whether the first side is placed on a floor using at least one of the acceleration sensor, the gyro sensor, the proximity sensor, the illuminance sensor, and the geomagnetic sensor.

5. The electronic device of claim 1, wherein the processor is arranged to determine whether the external electronic device exists in the charger at every specified cycle.

6. The electronic device of claim 1, further comprising:
a memory which is to store at least one registered near field communication identifier; and
a communication circuit,
wherein the processor is arranged to identify a near field communication identifier of the external electronic device using the communication circuit in response to existence of the external electronic device in the charger.

7. The electronic device of claim 6, wherein the processor is arranged to supply the power to the external electronic device using the charger in response to the near field communication identifier of the external electronic device matching the at least one registered near field communication identifier.

8. The electronic device of claim 6, wherein the processor is arranged to display a user interface for checking whether or not to supply the power to the external electronic device on the screen of the sub-display in response to the near field communication identifier of the external electronic device being different from at least one registered near field communication identifier stored in the memory or a time required for the communication circuit to establish near field communication with the external electronic device having passed a threshold time.

9. The electronic device of claim 8, wherein the processor is arranged to supply the power to the external electronic device using the charger in response to selecting wireless power sharing, and to supply the power to the external electronic device through the user interface.

10. The electronic device of claim 1, wherein the sensor module includes a Hall sensor,
wherein the processor is arranged to:
determine whether a state of the electronic device is changed to the folded state using the hall sensor while the power is supplied to the external electronic device; and
turn off the sub-display and perform wireless power sharing in response to the state of the electronic device being changed to the folded state.

11. The electronic device of claim 1, further comprising:
a power management module; and
an interface,
wherein the processor is arranged to determine whether a charging device is connected to the electronic device using at least one of the power management module and the interface while the power is being supplied to the external electronic device, and
wherein the charging device includes a wired charging device.

12. The electronic device of claim 11, wherein the processor is arranged to perform wireless power sharing while maintaining brightness of the screen of the sub-display in response to the charging device being connected to the electronic device.

13. The electronic device of claim 11, wherein the processor is arranged to perform wireless power sharing while adjusting brightness of the screen of the sub-display in response to the charging device being not connected to the electronic device.

14. A method (900) of supplying power to an external electronic device (710) using an electronic device (101), the method comprising:
determining (905) whether the electronic device (101) is in an unfolded state by a sensor module (176) of the electronic device (101);
determining (910) whether a first side of a housing of the electronic device (101) is placed on an external ground by the sensor module (176), wherein the first side is covered in the folded state and visible to outside in the unfolded state, and wherein a main display (210) is externally visible to the outside through the first side in the unfolded state;
determining (920) whether the external electronic device (710) exists in a charger (610) of the electronic device (101) in response to the electronic device (101) being in the unfolded state and the first side being placed on the external ground;
turning on (930) a screen of a sub-display (382) of the electronic device (101) in response to existence of the external electronic device (710) in the charger (610), the sub-display (382) disposed in a first area of a second side of the housing (300) and the charger (610) disposed in a second area of the second side of the housing (300), wherein the second side faces a direction opposite to the first side in the unfolded state;
supplying power wirelessly (940) to the external electronic device (710) using the charger (610); and
maintaining (950) the screen of the sub-display (382) turned on while supplying the power to the external electronic device (710).

15. The method of claim 14, wherein the determining whether the first side is placed on the external ground includes determining whether the first side is placed on a floor using at least one of an acceleration sensor, a gyro sensor, a proximity sensor, an illuminance sensor, and a geomagnetic sensor included in the sensor module.

## Patentansprüche

1. Elektronische Einrichtung (101), die einen gefalteten Zustand und einen entfalteten Zustand beinhaltet, umfassend:
ein Gehäuse (300), beinhaltend:
eine erste Seite, die in dem gefalteten Zustand abgedeckt und in dem entfalteten Zustand nach außen sichtbar ist; und
eine zweite Seite, die in dem entfalteten Zustand in eine Richtung entgegengesetzt zu der ersten Seite weist;
eine Hauptanzeige (210), die in dem entfalteten Zustand durch die erste Seite extern nach außen sichtbar ist;
eine Unteranzeige (382), die in einem ersten Bereich der zweiten Seite vorgesehen ist;
ein Ladegerät (610), das in einem zweiten Bereich der zweiten Seite vorgesehen ist;
ein Sensormodul (176); und
einen Prozessor (120), der mit der Hauptanzeige (210), der Unteranzeige (382), dem Ladegerät (610) und dem Sensormodul (176) wirkverbunden ist,
wobei der Prozessor (120) zu Folgendem angeordnet ist:
Bestimmen (905), ob die elektronische Einrichtung (101) in dem entfalteten Zustand ist, unter Verwendung des Sensormoduls (176);
Bestimmen (910), ob die erste Seite auf einem externen Grund platziert ist, unter Verwendung des Sensormoduls (176);
Bestimmen, ob eine externe elektronische Einrichtung (710) in dem Ladegerät (610) vorhanden ist, als Reaktion darauf, dass die elektronische Einrichtung (101) in dem entfalteten Zustand ist und die erste Seite auf dem externen Grund platziert ist;
Einschalten eines Bildschirms der Unteranzeige (382) als Reaktion auf Vorhandensein der externen elektronischen Einrichtung (710) in dem Ladegerät;
drahtlos Versorgen der externen elektronischen Einrichtung (710) mit Strom unter Verwendung des Ladegeräts (610); und
Halten des Bildschirm der Unteranzeige (382) eingeschaltet, während die externe elektronische Einrichtung (710) mit Strom versorgt wird.

2. Elektronische Einrichtung nach Anspruch 1, wobei eine erste hintere Abdeckung der zweiten Seite des Gehäuses in dem ersten Bereich vorgesehen ist,
wobei eine zweite hintere Abdeckung der zweiten Seite des Gehäuses in dem zweiten Bereich vorgesehen ist, und
wobei der erste Bereich und der zweite Bereich an gegenüberliegenden Seiten einer Faltachse vorgesehen sind, die eine Begrenzungslinie ist, entlang der die Hauptanzeige gefaltet ist.

3. Elektronische Einrichtung nach Anspruch 1, wobei das Ladegerät eine Ladespule beinhaltet.

4. Elektronische Einrichtung nach Anspruch 1, wobei das Sensormodul zumindest eines von einem Beschleunigungssensor, einem Gyrosensor, einem Näherungssensor, einem Beleuchtungsstärkesensor und einem geomagnetischen Sensor beinhaltet, und
wobei der Prozessor angeordnet ist, um zu bestimmen, ob die erste Seite auf einem Boden platziert ist, unter Verwendung von zumindest einem von dem Beschleunigungssensor, dem Gyrosensor, dem Näherungssensor, dem Beleuchtungsstärkesensor und dem geomagnetischen Sensor.

5. Elektronische Einrichtung nach Anspruch 1, wobei der Prozessor angeordnet ist, um zu bestimmen, ob die externe elektronische Einrichtung in dem Ladegerät bei jedem spezifizierten Zyklus vorhanden ist.

6. Elektronische Einrichtung nach Anspruch 1, ferner umfassend:
einen Speicher, der zumindest eine registrierte Nahfeldkommunikationskennung speichern soll; und
eine Kommunikationsschaltung,
wobei der Prozessor angeordnet ist, um eine Nahfeldkommunikationskennung der externen elektronischen Einrichtung unter Verwendung der Kommunikationsschaltung als Reaktion auf Vorhandensein der externen elektronischen Einrichtung in dem Ladegerät zu identifizieren.

7. Elektronische Einrichtung nach Anspruch 6, wobei der Prozessor angeordnet ist, um die externe elektronische Einrichtung unter Verwendung des Ladegeräts als Reaktion darauf mit Strom zu versorgen, dass die Nahfeldkommunikationskennung der externen elektronischen Einrichtung mit der zumindest einen registrierten Nahfeldkommunikationskennung übereinstimmt.

8. Elektronische Einrichtung nach Anspruch 6, wobei der Prozessor angeordnet ist, um eine Benutzerschnittstelle, um zu prüfen, ob die externe elektronische Einrichtung mit Strom zu versorgen ist, auf dem Bildschirm der Unteranzeige als Reaktion darauf anzuzeigen, dass sich die Nahfeldkommunikationskennung der externen elektronischen Einrichtung von zumindest einer registrierten Nahfeldkommunikationskennung, die in dem Speicher gespeichert ist, oder einer Zeit, die für die Kommunikationsschaltung erforderlich ist, unterscheidet, um Nahfeldkommunikation mit der externen elektronischen Einrichtung herzustellen, die eine Schwellenzeit überschritten hat.

9. Elektronische Einrichtung nach Anspruch 8, wobei der Prozessor angeordnet ist, um die externe elektronische Einrichtung unter Verwendung des Ladegeräts als Reaktion auf Auswählen von drahtloser Stromaufteilung mit Strom zu versorgen, und um die externe elektronische Einrichtung durch die Benutzerschnittstelle mit Strom zu versorgen.

10. Elektronische Einrichtung nach Anspruch 1, wobei das Sensormodul einen Hall-Sensor beinhaltet,
wobei der Prozessor zu Folgendem angeordnet ist:
Bestimmen, ob ein Zustand der elektronischen Einrichtung in den gefalteten Zustand geändert wird, unter Verwendung des Hall-Sensors, während die externe elektronische Einrichtung mit Strom versorgt wird; und
Ausschalten der Unteranzeige und Durchführen von drahtloser Stromaufteilung als Reaktion darauf, dass der Zustand der elektronischen Einrichtung in den gefalteten Zustand geändert wird.

11. Elektronische Einrichtung nach Anspruch 1, ferner umfassend:
ein Stromverwaltungsmodul; und
eine Schnittstelle,
wobei der Prozessor angeordnet ist, um zu bestimmen, ob eine Ladeeinrichtung mit der elektronischen Einrichtung verbunden ist, unter Verwendung von zumindest einem von dem Stromverwaltungsmodul und der Schnittstelle, während die externe elektronische Einrichtung mit Strom versorgt wird, und
wobei die Ladeeinrichtung eine drahtgebundene Ladeeinrichtung beinhaltet.

12. Elektronische Einrichtung nach Anspruch 11, wobei der Prozessor angeordnet ist, um als Reaktion darauf, dass die Ladeeinrichtung mit der elektronischen Einrichtung verbunden ist, drahtlose Stromaufteilung durchzuführen, während Helligkeit des Bildschirms der Unteranzeige beibehalten wird.

13. Elektronische Einrichtung nach Anspruch 11, wobei der Prozessor angeordnet ist, um drahtlose Stromaufteilung durchzuführen, während Helligkeit des Bildschirms der Unteranzeige als Reaktion darauf eingestellt wird, dass die Ladeeinrichtung nicht mit der elektronischen Einrichtung verbunden ist.

14. Verfahren (900) zum Versorgen einer externen elektronischen Einrichtung (710) mit Strom unter Verwendung einer elektronischen Einrichtung (101), wobei das Verfahren Folgendes umfasst:
Bestimmen (905), ob die elektronische Einrichtung (101) in einem entfalteten Zustand ist, durch ein Sensormodul (176) der elektronischen Einrichtung (101);
Bestimmen (910), ob eine erste Seite eines Gehäuses der elektronischen Einrichtung (101) auf einem externen Grund platziert ist, durch das Sensormodul (176), wobei die erste Seite in dem gefalteten Zustand abgedeckt und in dem entfalteten Zustand nach außen sichtbar ist, und wobei eine Hauptanzeige (210) in dem entfalteten Zustand durch die erste Seite extern nach außen sichtbar ist;
Bestimmen (920), ob die externe elektronische Einrichtung (710) in einem Ladegerät (610) der elektronischen Einrichtung (101) vorhanden ist, als Reaktion darauf, dass die elektronische Einrichtung (101) in dem entfalteten Zustand ist und die erste Seite auf dem externen Grund platziert ist;
Einschalten (930) eines Bildschirms einer Unteranzeige (382) der elektronischen Einrichtung (101) als Reaktion auf Vorhandensein der externen elektronischen Einrichtung (710) in dem Ladegerät (610), wobei die Unteranzeige (382) in einem ersten Bereich einer zweiten Seite des Gehäuses (300) vorgesehen ist und das Ladegerät (610) in einem zweiten Bereich der zweiten Seite des Gehäuses (300) vorgesehen ist, wobei die zweite Seite in dem entfalteten Zustand in eine Richtung entgegengesetzt zu der ersten Seite weist;
drahtlos Versorgen der externen elektronischen Einrichtung (710) mit Strom (940) unter Verwendung des Ladegeräts (610); und
Halten (950) des Bildschirm der Unteranzeige (382) eingeschaltet, während die externe elektronische Einrichtung (710) mit Strom versorgt wird.

15. Verfahren nach Anspruch 14, wobei das Bestimmen, ob die erste Seite auf dem externen Grund platziert ist, Bestimmen beinhaltet, ob die erste Seite auf einem Boden platziert ist, unter Verwendung von zumindest einem von einem Beschleunigungssensor, einem Gyrosensor, einem Näherungssensor, einem Beleuchtungsstärkesensor und einem geomagnetischen Sensor, der in dem Sensormodul beinhaltet ist.

## Revendications

1. Dispositif électronique (101) comprenant un état plié et un état déplié, comprenant :
un boîtier (300) comprenant :
un premier côté qui est couvert dans l'état plié et visible de l'extérieur dans l'état déplié ; et
un second côté qui est orienté dans une direction opposée au premier côté dans l'état déplié ;
un dispositif d'affichage principal (210) visible extérieurement de l'extérieur à travers le premier côté dans l'état déplié ;
un sous-dispositif d'affichage (382) disposé dans une première zone du second côté ;
un chargeur (610) disposé dans une seconde zone du second côté ;
un module de capteur (176) ; et
un processeur (120) connecté fonctionnellement au dispositif d'affichage principal (210), au sous-dispositif d'affichage (382), au chargeur (610) et au module de capteur (176),
ledit processeur (120) étant agencé pour :
déterminer (905) si le dispositif électronique (101) est dans l'état déplié à l'aide du module de capteur (176) ;
déterminer (910) si le premier côté est placé sur un sol externe à l'aide du module de capteur (176) ;
déterminer si un dispositif électronique externe (710) existe dans le chargeur (610) en réponse à l'état déplié du dispositif électronique (101) et au placement du premier côté
sur le sol externe ;
allumer un écran du sous-dispositif d'affichage (382) en réponse à l'existence du dispositif électronique externe (710) dans le chargeur ;
fournir sans fil de l'énergie au dispositif électronique externe (710) à l'aide du chargeur (610) ; et
maintenir l'écran du sous-dispositif d'affichage (382) allumé tout en fournissant de l'énergie au dispositif électronique externe (710).

2. Dispositif électronique de la revendication 1, un premier couvercle arrière du second côté du boîtier étant disposé dans la première zone,
un second couvercle arrière du second côté du boîtier étant disposé dans la seconde zone, et
ladite première zone et ladite seconde zone étant disposées sur des côtés opposés d'un axe de pliage, qui est une ligne limite le long de laquelle le dispositif d'affichage principal est plié.

3. Dispositif électronique de la revendication 1, ledit chargeur comprenant une inductance de charge.

4. Dispositif électronique de la revendication 1, ledit module de capteur comprenant au moins l'un d'un capteur d'accélération, d'un capteur gyroscopique, d'un capteur de proximité, d'un capteur d'éclairement et d'un capteur géomagnétique, et
ledit processeur étant agencé pour déterminer si le premier côté est placé sur un plancher à l'aide d'au moins l'un du capteur d'accélération, du capteur gyroscopique, du capteur de proximité, du capteur d'éclairement et du capteur géomagnétique.

5. Dispositif électronique de la revendication 1, ledit processeur étant agencé pour déterminer si le dispositif électronique externe existe dans le chargeur à chaque cycle spécifié.

6. Dispositif électronique de la revendication 1, comprenant en outre :
une mémoire qui doit stocker au moins un identifiant de communication en champ proche enregistré ; et
un circuit de communication,
ledit processeur étant agencé pour identifier un identifiant de communication en champ proche du dispositif électronique externe à l'aide du circuit de communication en réponse à l'existence du dispositif électronique externe dans le chargeur.

7. Dispositif électronique de la revendication 6, ledit processeur étant agencé pour fournir l'énergie au dispositif électronique externe à l'aide du chargeur en réponse à l'identifiant de communication en champ proche du dispositif électronique externe correspondant à l'au moins un identifiant de communication en champ proche enregistré.

8. Dispositif électronique de la revendication 6, ledit processeur étant agencé pour afficher une interface utilisateur en vue de la vérification pour savoir si de l'énergie doit être fournie, ou non, au dispositif électronique externe sur l'écran du sous-dispositif d'affichage en réponse à la différence entre l'identifiant de communication en champ proche du dispositif électronique externe et au moins un identifiant de communication en champ proche enregistré stocké dans la mémoire ou un temps requis pour le circuit de communication pour établir une communication en champ proche avec le dispositif électronique externe ayant dépassé un temps seuil.

9. Dispositif électronique de la revendication 8, ledit processeur étant agencé pour fournir l'énergie au dispositif électronique externe à l'aide du chargeur en réponse à la sélection du partage d'énergie sans fil, et pour fournir de l'énergie au dispositif électronique externe par l'intermédiaire de l'interface utilisateur.

10. Dispositif électronique de la revendication 1, ledit module de capteur comprenant un capteur à effet Hall,
ledit processeur étant agencé pour :
déterminer si un état du dispositif électronique est modifié pour passer à l'état plié à l'aide du capteur à effet Hall pendant que l'énergie est fournie au dispositif électronique externe ; et éteindre le sous-dispositif d'affichage et effectuer un partage d'énergie sans fil en réponse à la modification de l'état du dispositif électronique pour passer à l'état plié.

11. Dispositif électronique de la revendication 1, comprenant en outre :
un module de gestion de puissance ; et
une interface,
ledit processeur étant agencé pour déterminer si un dispositif de charge est connecté au dispositif électronique à l'aide d'au moins l'un du module de gestion d'énergie et de l'interface pendant que l'énergie est fournie au dispositif électronique externe,
et
ledit dispositif de charge comprenant un dispositif de charge câblé.

12. Dispositif électronique de la revendication 11, ledit processeur étant agencé pour effectuer un partage d'énergie sans fil tout en maintenant la luminosité de l'écran du sous-dispositif d'affichage en réponse à la connexion du dispositif de charge au dispositif électronique.

13. Dispositif électronique de la revendication 11, ledit processeur étant agencé pour effectuer un partage d'énergie sans fil tout en réglant la luminosité de l'écran du sous-dispositif d'affichage en réponse à l'absence de connexion du dispositif de charge au dispositif électronique.

14. Procédé (900) de fourniture d'énergie à un dispositif électronique externe (710) à l'aide d'un dispositif électronique (101), le procédé comprenant :
la détermination (905) pour savoir si le dispositif électronique (101) est dans un état déplié par un module de capteur (176) du dispositif électronique (101) ;
la détermination (910) pour savoir si un premier côté d'un boîtier du dispositif électronique (101) est placé sur un sol externe par le module de capteur (176), ledit premier côté étant couvert dans l'état plié et visible de l'extérieur dans l'état déplié, et un dispositif d'affichage principal (210) étant visible extérieurement de l'extérieur à travers le premier côté dans l'état déplié ;
la détermination (920) pour savoir si le dispositif électronique externe (701) existe dans un chargeur (610) du dispositif électronique (101) en réponse à l'état déplié dans lequel se trouve le dispositif électronique (101) et au placement du premier côté sur le sol externe ;
l'allumage (930) d'un écran d'un sous-dispositif d'affichage (382) du dispositif électronique (101) en réponse à l'existence du dispositif électronique externe (710) dans le chargeur (610), le sous-dispositif d'affichage (382) étant disposé dans une première zone d'un second côté du boîtier (300) et le chargeur (610) étant disposé dans une seconde zone du second côté du boîtier (300),
,ledit second côté faisant face à une direction opposée au premier côté dans l'état déplié ;
la fourniture sans fil de l'énergie (940) au dispositif électronique externe (710) à l'aide du chargeur (610) ; et
le maintien (950) de l'écran du sous-dispositif d'affichage (382) allumé tout en fournissant de l'énergie au dispositif électronique externe (710).

15. Procédé de la revendication 14, ladite détermination pour savoir si le premier côté est placé sur le sol externe comprenant la détermination pour savoir si le premier côté est placé sur un plancher à l'aide d'au moins l'un d'un capteur d'accélération, d'un capteur gyroscopique, d'un capteur de proximité, d'un capteur d'éclairement et d'un capteur géomagnétique compris dans le module de capteur.
